# EUROPÄISCHE PATENTSCHRIFT

(11) **EP 2 465 656 B1**
(45) Veröffentlichungstag und Bekanntmachung des Hinweises auf die Patenterteilung: **16.03.2016**
(21) Anmeldenummer: 11186506.9
(22) Anmeldetag: 25.10.2011
(51) Int. Cl.: B29B 17/02, B29K 667/00, B29K 27/06, B29K 67/00, B29K 105/06

(54) **Verfahren zum Abtrennen von Fremdpolymeren aus einem Polymergemisch**
Method for separating foreign polymers from a polymer mixture
Procédé de séparation de polymères étrangers à partir d'un mélange de polymères

(30) Priorität: 20.12.2010 DE 102010063601
(43) Veröffentlichungstag der Anmeldung: 20.06.2012
(73) Patentinhaber: Krones AG, 93073 Neutraubling (DE)
(72) Erfinder: Friedlaender, Thomas, 93049 Regensburg (DE)
(74) Vertreter: Grünecker Patent- und Rechtsanwälte PartG mbB

(56) Entgegenhaltungen:
- WO-A1-2005/037514
- DE-A1- 19 953 659
- JP-A- 11 226 957
- US-A- 5 660 282

## Beschreibung

Die Erfindung betrifft ein Verfahren zum Abtrennen von Fremdpolymeren aus einem Polymergemisch, das amorphe PET Partikel und kristalline PET Partikel umfasst, und insbesondere die Reinigung von Polymerflakes aus PET Flaschenabfällen.

Beim Recycling von PET Flaschen wird das gesammelte Flaschenmaterial zunächst zu sogenannten Flakes zerkleinert, die Partikeldurchmesser im Bereich von ca. 1 bis 10 mm aufweisen. Etwa 70 % bis 90 % der Flakes bestehen aus kristallinem PET Material aus der Flaschenwand, die eine Wandstärke von kleiner ca. 0,5 mm aufweisen. Etwa 10 % bis 30 % der Flakes bestehen aus amorphem PET Material aus Hals- und Bodenbereichen der Flaschen oder aus gemahlenen Preforms mit Wandstärken bzw. Partikelgrößen von ca. 1 mm oder mehr. Zusätzlich enthalten die Flakes üblicherweise Verunreinigungen wie Fremdpolymere wie z.B. Polyvinylchlorid (PVC), Polyamid (PA), Polyolefine, wie Polypropylen (PP) oder Polyethylen (PE), Polymilchsäure (PLA) oder Polystyrol (PS).

Diese Fremdpolymere stören bei der weiteren thermischen Verarbeitung des PET Materials, wie z.B. Rekristallisation oder Extrusion, da sie die Qualität des PET Recyclats erniedrigen. Insbesondere bedingt der Verbleib von größeren Mengen an Fremdpolymeren eine Dunkelfärbung des PET Recyclats, da die Fremdpolymere bei der thermischen Beanspruchung zumindest teilweise zersetzt werden. Zusätzlich enthält insbesondere PVC Chloridanteile, die bei der thermischen Wiederaufarbeitung des Recyclats zu einem Abbau der Polymerketten führen Um dies zu vermeiden, müssen die Fremdstoffe weitestgehend, d.h. bis bevorzugt unter ca. 100 ppm Restanteil im PET Recyclat, abgetrennt werden.

Herkömmliche Trennverfahren sind z.B. Methoden die über Unterschiede in der spezifischen Materialdichte erfolgen, womit Polymere mit einer geringeren Dichte als PET, wie z.B. PP oder PE, gut abgetrennt werden können. Allerdings kann damit z.B. PVC nur ungenügend von PET getrennt werden.

Weiter sind Verfahren zum Abtrennen von Fremdpolymeren aus PET Material bekannt, die auf dem Prinzip einer erhöhten Haftungsneigung der Fremdpolymere auf Oberflächen im Vergleich zu PET beruhen. Dabei wird das Polymergemisch auf eine bestimmte Temperatur erhitzt, die über dem Erweichungspunkt der abzutrennenden Fremdpolymere aber unter der Erweichungstemperatur des PET Materials liegt. Anschließend wird das Gemisch mit einem mechanischen Kontaktkörper in Berührung gebracht. Durch die mechanische Haftung der Fremdpolymere am Kontaktkörper können diese vom PET abgetrennt werden. Diese Trennmethoden sind z.B. in DE4303500A1, DE4004300A1, DE3722777A1 oder US5236603A beschrieben. Insbesondere bei Flakes aus PET-Flaschenmaterial, die einen hohen Anteil von Flakes aus amorphem PET Material besitzen, besteht der Nachteil dieser herkömmlichen Verfahren darin, dass die erforderlichen Betriebstemperaturen auch über dem Erweichungspunkt der amorphen PET Flakes liegen, und diese dadurch auch am Kontaktkörper haften. Dies wiederum verringert die Ausbeute an gereinigtem PET-Material, d.h. die herkömmlichen Verfahren sind sehr ineffektiv.

JP 11226957A, US 5,660,282A und WO 2005/037514 A1 betreffen auch Vorrichtungen und Verfahren zum Abtrennen von Fremdpolymeren aus Polymergemischen.

Somit liegt die Aufgabe der vorliegenden Erfindung in der Bereitstellung eines Verfahrens zum Abtrennen von Fremdpolymeren aus einem Polymergemisch, das amorphe PET Partikel und kristalline PET Partikel umfasst, die eine hohe Qualität des resultierenden PET Materials bedingen, und mit denen Fremdpolymere effektiv abgetrennt werden können, ohne dass die Ausbeute an resultierendem PET Material verringert wird.

Diese Aufgabe wird mit dem Verfahren nach Anspruch 1 erfindungsgemäß gelöst. Bevorzugte Ausführungsformen des Verfahrens sind in den Ansprüchen 2 bis 7 beschrieben.

Das erfindungsgemäße Verfahren gemäß Anspruch 1 zum Abtrennen von Fremdpolymeren aus einem Polymergemisch, umfassend amorphe PET Partikel und kristalline PET Partikel, wobei der Erweichungspunkt der Fremdpolymere niedriger als der der kristallinen PET Partikel ist, umfasst die folgenden Schritte:
- Abtrennen der amorphen PET Partikel aus dem Polymergemisch,
- Erhitzen des resultierenden Polymergemisches auf eine Temperatur, die zwischen dem Erweichungspunkt der Fremdpolymere und dem der kristallinen PET Partikel liegt, und
- Abtrennen der Fremdpolymere aus dem resultierenden Polymergemisch.

Der Begriff "amorphe PET Partikel" bezieht sich auf PET Partikel die keine oder nur sehr geringe Anteile an kristallinen Bereichen, bevorzugt weniger als 1 % kristalline Bereiche, umfassen, insbesondere auf PET Flakes aus Material aus Hals- und Bodenbereichen von PET Flaschen oder aus gemahlenen Preforms. Der Begriff "kristalline PET Partikel" bezieht sich auf kristalline und semikristalline PET Partikel, die eine Kristallinität von mindestens > 5%, bevorzugt > 25%, besonders bevorzugt > 40% besitzen, d. h. insbesondere auf PET Flakes aus Wandmaterial von PET Flaschen, die durch eine biaxiale Verstreckung einer kalten Kristallisation unterzogen wurden.

Unter dem Begriff "PET" werden Polyethylenterephthalat Copolymere verstanden, die weitere übliche Copolymere umfassen können, insbesondere PET Material zur Herstellung von Verpackungsbehältern wie z.B. Getränkeflaschen. Der Begriff "Fremdpolymer" umfasst sämtliche Arten von anderen Polymeren, die im Polymergemisch vorhanden sind, insbesondere PVC, PP, PE, PS, PET-G, PA oder PLA.

Unter dem Begriff "Erweichungspunkt" wird die Temperatur verstanden, bei dem das Polymer von einem festen in einen flüssigen Zustand übergeht, d.h. der Erweichungspunkt entspricht bei amorphen Polymeren dem Glasübergangspunkt und bei (teil)kristallinen Polymeren dem Schmelzpunkt.

Das Abtrennen der amorphen PET Partikel aus dem Polymergemisch, d.h. insbesondere das Trennen der amorphen PET Partikel von den kristallinen PET Partikeln kann auf eine beliebige Art und Weise z.B. aufgrund von Unterschieden in der Dichte, Kristallinität oder Größe (Wandstärke) der Partikel erfolgen.

Nach Abtrennen der amorphen PET Partikel aus dem Polymergemisch erfolgt ein Erhitzen des resultierenden Polymergemisches auf eine Temperatur, die zwischen dem Erweichungspunkt der Fremdpolymere und dem der kristallinen Partikel liegt, d.h. insbesondere auf eine Temperatur zwischen 100 und 190°C, bevorzugt zwischen 130 und 170°C.

Das Erhitzen des Polymergemisches auf eine Temperatur, die nur über dem Erweichungspunkt der Fremdpolymere liegt, bedingt die Abtrennbarkeit der erweichten Fremdpartikel von den festen kristallinen PET Partikeln. Zum einen resultiert die Erweichung der Fremdpolymere in einer Änderung ihrer physikalischen Eigenschaften wie z.B. der Plastizität oder der Haftungsneigung and Oberflächen, die für die Abtrennung der Fremdpolymere ausgenützt werden kann. Zum anderen erfolgt beim Erhitzen der Fremdpolymeren auf eine Temperatur, die über deren Erweichungspunkt liegt, ein zumindest teilweises Zersetzen, wodurch eine Dunkelfärbung der Fremdpolymere erfolgt, was wiederum für den Abrennungsschritt ausgenützt werden kann.

Gleichzeitig ist anzumerken, dass der oben beschriebene Temperaturbereich über dem Erweichungspunkt der amorphen PET Partikel liegt. D.h. ohne ein vorhergehendes Abtrennen der amorphen PET Partikel aus dem Polymergemisch würden diese beim Schritt des Abtrennens der Fremdpolymere der amorphen PET Partikel auch mit aus dem Polymergemisch mit abgetrennt werden, und so für den weiteren Recyclingprozess nicht mehr zur Verfügung stehen.

Somit bedingt das Verfahren eine hohe Qualität des resultierenden PET-Materials, da störende Fremdpolymere effektiv abgetrennt werden können. Der Anteil der Fremdpolymere im resultierenden PET Material ist dabei bevorzugt kleiner als 100 ppm, besonders bevorzugt kleiner als 10 ppm. Gleichzeitig erfolgt auch ein Abtrennen der amorphen PET Partikel von den Fremdstoffen, die dann für den Recyclingprozess, im Gegensatz zu herkömmlichen Verfahren, zur Verfügung stehen, d.h. beim vorliegenden Verfahren erfolgt keine Verringerung der Ausbeute an PET Material.

Nach dem Abtrennen der Fremdpolymere aus dem Polymergemisch kann insbesondere ein Schritt des Rückführens der amorphen PET Partikeln zu den kristallinen PET Partikeln erfolgen, so dass das resultierende PET Material gemeinsam und effektiv weiterverarbeitet werden kann.

Bevorzugt umfasst der Schritt des Abtrennens der amorphen PET Partikel aus dem Polymergemisch einen Windsichtungsprozess. Windsichtungsprozesse trennen amorphe PET Partikel von kristallinen PET Partikeln aufgrund von Unterschieden in Ihrer Wandstärke, Form, Dichte oder Durchmesser. Insbesondere kann die Windsichtung über einen sogenannten Zickzacksichtungsprozess, einen Luftherdsortierungsprozess oder einen Trenntischsortierungsprozess erfolgen. Entsprechende Prozesse sind im Stand der Technik bekannt, und werden hier nicht weiter erläutert. Damit lassen sich effektiv amorphe PET Partikel aus dem Polymergemisch, d.h. von den kristallinen PET Partikeln, abtrennen. Fremdpolymere werden mit einem Windschichtungsprozess nur zu einem sehr geringen Teil aus dem Polymergemisch abgetrennt, d.h. verbleiben zum Großteil dort.

Weiter ist bevorzugt, dass das Verfahren, als den Schritt des Abtrennens der Fremdpolymere, den Schritt des In Kontaktbringens des resultierenden Polymergemisches mit einem mechanischen Kontaktkörper umfasst, wobei der Kontaktkörper bevorzugt eine rotierende Metallwalze ist. Am mechanischen Kontaktkörper haften die Fremdpolymere aufgrund der Tatsache, dass diese über deren Erweichungspunkt erwärmt worden sind und so ihre Haftungsneigung im Vergleich zu den festen kristallinen PET Partikeln erhöht ist. Insbesondere bevorzugt ist dabei, dass der Schritt des Erhitzens des Polymergemisches über ein Erhitzen des mechanischen Kontaktkörpers erfolgt, d.h. dass der Energieeintrag der nötig ist um das Polymergemisch zu erwärmen, über den erhitzten Kontaktkörper erfolgt. Über eine solche Abtrennung können effektiv Fremdpolymere aus dem Polymergemisch abgetrennt werden.

Alternativ oder in Kombination dazu verursacht der Schritt des Erhitzens eine Farbänderung, insbesondere bevorzugt eine Dunkelfärbung, der Fremdpolymere aufgrund des Erhitzens. Dadurch können die Fremdpolymere aus dem resultierenden Polymergemisch über ein Detektieren und Aussortieren der Fremdpolymere aufgrund der Farbänderung erfolgen. Somit können Fremdpolymere effektiv aus dem Polymergemisch entfernt werden.

Weiter umfasst das Verfahren bevorzugt einen Schritt, bei dem die abgetrennten, amorphen PET Partikel vor dem Schritt des Rückführens zu den kristallinen PET Partikeln durch eine thermische Kristallisation in thermisch kristallisierte PET Partikel überführt werden. Somit kann die Ausbeute von kristallinen PET Partikeln maximiert werden.

Es ist insbesondere bevorzugt, dass diese thermische Behandlung eine Farbänderung, bevorzugt eine Dunkelfärbung, von verbliebenen Fremdpolymeren in den abgetrennten, amorphen PET Partikeln verursacht. Dabei umfasst das Verfahren den Schritt des Herstellens von gereinigten, thermisch kristallisierten PET Partikeln über das Abtrennen der Fremdpolymere durch deren Detektieren und Aussortieren aus den thermisch kristallisierten PET Partikeln aufgrund dieser Farbänderung. Über diesen zusätzlichen Abtrennungsschritt lässt sich eine besonders hohe Qualität an resultierendem PET Material gewährleisten.

Das erfindungsgemäße Verfahren kann in einer Vorrichtung durchgeführt werden, die im Folgenden beschrieben wird: Diese Vorrichtung zum Abtrennen von Fremdpolymeren aus einem Polymergemisch, umfassend amorphe PET Partikel und kristalline PET Partikel, wobei der Erweichungspunkt der Fremdpolymere niedriger als der der kristallinen PET Partikel ist, umfasst:
- Eine erste Abtrennungseinheit zum Abtrennen der amorphen PET Partikel aus dem Polymergemisch,
- eine zweite Abtrennungseinheit mit Heizvorrichtung zum Abtrennen der Fremdpolymere aus dem resultierenden Polymergemisch.

Durch die Kombination der ersten Abtrennungseinheit und der zweiten Abtrennungseinheit kann aufgrund der vorherigen Abtrennung der amorphen PET Partikel aus dem Polymergemisch vor dem Abtrennen der Fremdpolymere die Vorrichtung effektiv betrieben werden. Weiter lässt sich mit der Vorrichtung eine hohe Qualität des resultierenden PET Materials gewährleisten.

Bevorzugt umfasst die Vorrichtung eine Rückführungseinheit zum Rückführen der amorphen PET Partikel zu den kristallinen PET Partikeln nach Abtrennen der Fremdpolymere. Dadurch kann der Anteil an PET Material maximiert werden und das resultierende PET Material kann gemeinsam und effektiv weiterverarbeitet werden.

Bevorzugt umfasst die erste Abtrennungseinheit zum Abtrennen der amorphen PET Partikel aus dem Polymergemisch einen Windsichter, bevorzugt einen Zickzacksichter, Luftherdsortierer oder einen Trenntischsortierer. Entsprechende Vorrichtungen sind im Stand der Technik bekannt und werden hier nicht weiter erläutert. Mit diesen Abtrennungseinheiten können effektiv amorphe PET Partikel von kristallinen PET Partikeln, insbesondere Material aus dem Hals- oder Bodenbereich vom Wandmaterial von PET Flakes aus Flaschenmaterial, getrennt werden.

Weiter ist die zweite Abtrennungseinheit zum Abtrennen der Fremdpolymere aus dem resultierenden Polymergemisch bevorzugt ein mechanischer Kontaktkörper, insbesondere bevorzugt eine rotierende Metallwalze, an der die Fremdpolymere haften. Insbesondere umfasst der mechanische Kontaktkörper eine Heizvorrichtung, die das Polymergemisch nach Abtrennen der amorphen PET Partikel auf eine Temperatur erhitzt, die zwischen dem Erweichungspunkt der Fremdpolymere und dem der kristallinen PET Partikel liegt. Durch diese zweite Abtrennungseinheit lassen sich effektiv Fremdpolymere aus PET Material abtrennen und so eine hohe Qualität des resultierenden PET Materials gewährleisten.

Alternativ oder in Kombination dazu ist bevorzugt, dass die zweite Abtrennungseinheit zum Abtrennen der Fremdpolymere aus dem resultierenden Polymergemisch eine Farbsortierungseinheit zum Detektieren und Aussortieren von Fremdpolymeren aus dem resultierenden Polymergemisch ist. Über diese Farbsortierungseinheit lassen sich effektiv dunkel gefärbte Fremdpolymere, die aufgrund des Erhitzens auf eine Temperatur, die über deren Erweichungspunkt liegt, ausgebildet wurden, abtrennen und so eine hohe Qualität des resultierenden PET Materials gewährleisten.

Weiter kann die Vorrichtung eine Kristallisationseinheit zum Herstellen von thermisch kristallisierten PET Partikeln aus den abgetrennten amorphen PET Partikeln umfassen. Über diese Kristallisationseinheit lässt sich die Menge an gereinigten kristallinen PET Partikeln erhöhen und die Vorrichtung so besonders effektiv ausgestalten.

Dabei ist insbesondere bevorzugt, dass die Vorrichtung eine Farbsortierungseinheit zum Detektieren und Aussortieren von verbliebenen Fremdpolymeren aus den thermisch kristallisierten PET Partikeln und zur Herstellung von gereinigten, thermisch kristallisierten PET Partikeln umfasst. Über eine solche Farbsortierungseinheit lassen sich evtl. verbliebene Fremdpolymere aus den abgetrennten amorphen PET Partikeln abtrennen, was die Qualität des resultierenden PET Materials weiter erhöht.

Die Erfindung und ihre Vorteile werden anhand der in den nachfolgenden Zeichnungen dargestellten Ausführungsbeispiele weiter erklärt. Dabei zeigen:
- Fig. 1:: Eine schematische Schnittzeichnung einer Vorrichtung zum Durchführen des erfindungsgemäßen Verfahrens;
- Fig. 2:: Eine schematische Schnittzeichnung einer bevorzugten Ausführungsform einer Vorrichtung zum Durchführen des erfindungsgemäßen Verfahrens; und
- Fig. 3:: Eine schematische Schnittzeichnung einer weiteren bevorzugten Ausführungsform einer Vorrichtung zum Durchführen des erfindungsgemäßen Verfahrens.

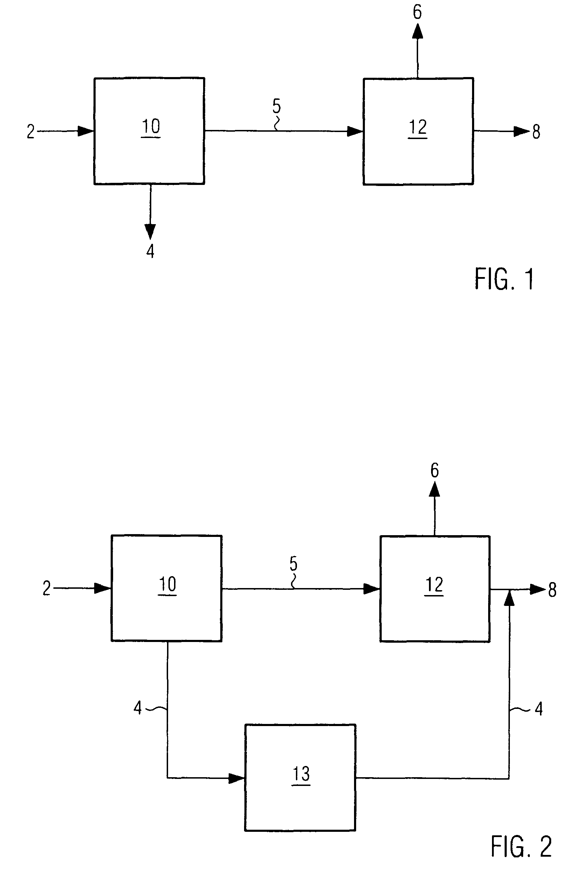

Fig. 1 zeigt eine Vorrichtung mit einer ersten Abtrennungseinheit (10) zum Abtrennen von amorphen PET Partikeln (4) aus einem Polymergemisch (2), sowie eine zweite Abtrennungseinheit (12) mit Heizvorrichtung (nicht gezeigt) zum Abtrennen von Fremdpolymeren (6) aus dem resultierenden Polymergemisch (5). Dabei werden gereinigte kristalline PET Partikel (8) erzeugt.

In der Vorrichtung gemäß Fig. 1 kann ein Verfahren gemäß der vorliegenden Erfindung wie folgt durchgeführt werden:
Das Polymergemisch (2), das amorphe PET Partikel (4), kristalline PET Partikel (8), sowie Fremdpolymere (6) umfasst, wird in die erste Abtrennungseinheit (10) überführt. Dort werden die amorphen PET Partikel (4) über einen Windsichter aus dem Polymergemisch (2) abgetrennt. Das resultierende Polymergemisch (5) wird in eine zweite Abtrennungseinheit (12) überführt, und mit einer Heizvorrichtung (nicht gezeigt) auf eine Temperatur erhitzt, die zwischen dem Erweichungspunkt der Fremdpolymere (6) und dem der kristallinen PET Partikel liegt. In der zweiten Abtrennungseinheit (12) erfolgt anschließend das Abtrennen der Fremdpolymere (6), wobei das Abtrennen durch in Kontakt bringen mit einer rotierenden Metallwalze erfolgt, an der die Fremdpolymere (6) haften. Weiter bedingt das Erhitzen des resultierenden Polymergemisches (5) eine Dunkelfärbung der Fremdpolymere. In einem zusätzlichen oder alternativen Trennungsschritt erfolgt die Abtrennung der Fremdpolymere (6) mittels Detektieren und Aussortieren der Fremdpolymere (6) aufgrund dieser Farbänderung über eine Farbsortierungseinheit (nicht gezeigt). Nach dem Schritt des Abtrennens der Fremdpolymere (6) resultieren gereinigte kristalline PET Partikel (8), die aus der zweiten Abtrennungseinheit (12) ausgeführt werden.

Eine bevorzugte Ausführungsform der Vorrichtung ist in Fig. 2 beschrieben. Diese ist analog zu der Vorrichtung gemäß Fig. 1 aufgebaut, mit dem Unterschied, dass sich in dieser Ausführungsform zusätzlich eine Rückführungseinheit (13) befindet, mit der die abgetrennten amorphen PET Partikel (4) zu den kristallinen PET Partikeln (8) zurückgeführt werden, wobei diese Zurückführung nach der Abtrennung der Fremdpolymere (6) aus dem resultierenden Polymergemisch (5) erfolgt.

In der Vorrichtung gemäß Fig. 2 kann ein Verfahren gemäß der vorliegenden Erfindung in analoger Weise wie oben beschrieben durchgeführt werden. Der einzige Unterschied besteht darin, dass zusätzlich die abgetrennten amorphen PET Partikel (4) nach der zweiten Abtrennungseinheit (12) zu den kristallinen PET Partikeln, d.h. nach dem Abtrennen der Fremdpolymere aus dem resultierenden Polymergemisch (5), zurückgeführt werden.

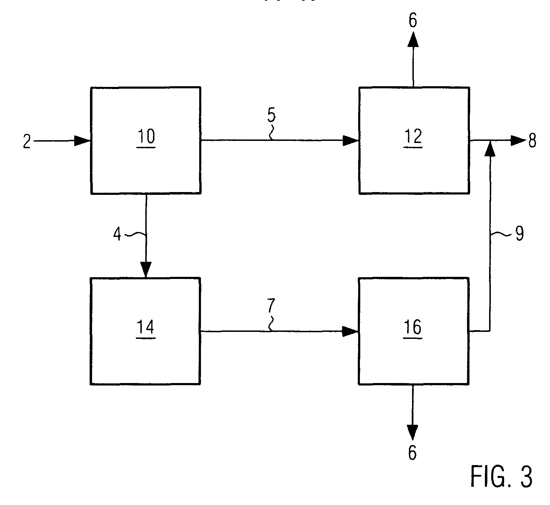

Eine weitere bevorzugte Ausführungsform der Vorrichtung ist in Fig. 3 beschrieben. Diese ist analog zu den Vorrichtungen gemäß Fig. 1 und 2 aufgebaut, mit dem Unterschied, dass innerhalb der Rückführungseinheit (hier nicht gezeigt) eine Kristallisationseinheit (14) zum Herstellen von thermisch kristallisierten PET Partikeln (7) vorhanden ist. Weiter umfasst die bevorzugte Ausführungsform eine Farbsortierungseinheit (16) zum Detektieren und Aussortieren von verbliebenen Fremdpolymeren (6) aus den thermisch kristallisierten PET Partikeln (7) und zur Herstellung von gereinigten, thermisch kristallisierten PET Partikeln (9).

In der Vorrichtung gemäß Fig. 3 kann ein Verfahren gemäß der vorliegenden Erfindung in analoger Weise wie oben beschrieben durchgeführt werden. Der Unterschied zur Ausführungsform gemäß Fig. 2 besteht darin, dass innerhalb des Schrittes des Rückführens der amorphen PET Partikel (4) diese vorher durch eine thermische Kristallisation in thermisch kristallisierte PET Partikel (7) überführt werden. Diese thermische Kristallisation verursacht gleichzeitig eine Dunkelfärbung von verbliebenen Fremdpolymeren (6), die durch Detektieren und Aussortieren aus den thermisch kristallisierten PET Partikeln (7) in der Farbsortierungseinheit (16) abgetrennt werden. Anschließend werden die gereinigten, kristallisierten PET Partikel (9) zu den kristallinen PET Partikeln (8) zugegeben.

## Patentansprüche

1. Verfahren zum Abtrennen von Fremdpolymeren (6) aus einem Polymergemisch (2), umfassend amorphe PET Partikel (4) und kristalline PET Partikel (8), wobei der Erweichungspunkt der Fremdpolymere (6) niedriger als der der kristallinen PET Partikel (8) ist, und wobei das Verfahren die Schritte umfasst:
- Abtrennen der amorphen PET Partikel (4) aus dem Polymergemisch (2),
- Erhitzen des resultierenden Polymergemisches (5) auf eine Temperatur, die zwischen dem Erweichungspunkt der Fremdpolymere (6) und dem der kristallinen PET Partikel (8) liegt, und
- Abtrennen der Fremdpolymere (6) aus dem resultierenden Polymergemisch (5).

2. Verfahren nach Anspruch 1, weiter umfassend den Schritt des Rückführens der abgetrennten amorphen PET Partikel (4) zu den kristallinen PET Partikeln (8) nach dem Schritt des Abtrennens der Fremdpolymere (6) aus dem resultierenden Polymergemisch (5).

3. Verfahren nach Anspruch 1 oder 2, wobei der Schritt des Abtrennens der amorphen PET Partikel (4) aus dem Polymergemisch (2) ein Windsichtungsprozess, bevorzugt ein Zickzacksichtungsprozess, ein Luftherdsortierungsprozess oder ein Trenntischsortierungsprozess, ist.

4. Verfahren nach Anspruch 1 bis 3, wobei der Schritt des Abtrennens der Fremdpolymere (6) das in Kontakt bringen mit einem mechanischen Kontaktkörper, bevorzugt einer rotierenden Metallwalze, umfasst, an der die Fremdpolymere (6) haften, und wobei der Schritt des Erhitzens des resultierenden Polymergemisches (5) bevorzugt über ein Erhitzen des mechanischen Kontaktkörpers erfolgt.

5. Verfahren nach Anspruch 1 bis 4, wobei der Schritt des Erhitzens eine Farbänderung, bevorzugt eine Dunkelfärbung, der Fremdpolymere (6) verursacht, und der Schritt des Abtrennens der Fremdpolymere (6) aus dem resultierenden Polymergemisch (5) das Detektieren und Aussortieren der Fremdpolymere (6) aufgrund der Farbänderung umfasst.

6. Verfahren nach Anspruch 2 bis 5, wobei die abgetrennten amorphen PET Partikel (4) vor dem Schritt des Rückführens zu den kristallinen PET Partikeln (8) durch eine thermische Kristallisation in thermisch kristallisierte PET Partikel (7) überführt werden.

7. Verfahren nach Anspruch 6, wobei die thermische Kristallisation eine Farbänderung, bevorzugt eine Dunkelfärbung, von verbliebenen Fremdpolymeren (6) verursacht, und wobei das Verfahren den Schritt des Herstellens von gereinigten, thermisch kristallisierten PET Partikeln (9) über Abtrennen der Fremdpolymere (6) durch Detektieren und Aussortieren aus den thermisch kristallisierten PET Partikeln (7) aufgrund der Farbänderung umfasst.

## Claims

1. Method of separating foreign polymers (6) from a polymer mixture (2), comprising amorphous PET particles (4) and crystalline PET particles (8), wherein the softening point of the foreign polymers (6) is lower than that of the crystalline PET particles (8), and wherein the method comprises the steps of:
- separating the amorphous PET particles (4) from the polymer mixture (2),
- heating the resulting polymer mixture (5) to a temperature between the softening point of the foreign polymers (6) and that of the crystalline PET particles (8), and
- separating the foreign polymers (6) from the resulting polymer mixture (5).

2. Method according to claim 1, further comprising the step of returning the separated amorphous PET particles (4) to the crystalline PET particles (8) after the step of separating the foreign polymers (6) from the resulting polymer mixture (5).

3. Method according to claim 1 or 2, wherein the step of separating the amorphous PET particles (4) from the polymer mixture (2) is an air separation process, preferably a zigzag separation process, a pneumatic sorting process, or a separation table sorting process.

4. Method according to claims 1 to 3, wherein the step of separating the foreign polymers (6) comprises contacting them with a mechanical contact body, preferably a rotating metal roller to which the foreign polymers (6) adhere, and wherein the step of heating the resulting polymer mixture (5) is preferably effected by heating the mechanical contact body.

5. Method according to claims 1 to 4, wherein the step of heating causes a change of color, preferably a darkening, of the foreign polymers (6), and the step of separating the foreign polymers (6) from the resulting polymer mixture (5) comprises detecting and sorting out the foreign polymers (6) on the basis of the change of color.

6. Method according to claims 2 to 5, wherein the separated amorphous PET particles (4) are transformed into thermally crystallized PET particles (7) by thermal crystallization before the step of returning them to the crystalline PET particles (8).

7. Method according to claim 6, wherein thermal crystallization causes a change of color, preferably a darkening, of remaining foreign polymers (6), and wherein the method comprises the step of manufacturing purified thermally crystallized PET particles (9) by separating the foreign polymers (6) by detecting and sorting them out from the thermally crystallized PET particles (7) due to their change of color.

## Revendications

1. Procédé pour séparer des polymères étrangers (6) d'un mélange de polymères (2), comprenant des particules de PET amorphes (4) et des particules de PET cristallines (8), le point de ramollissement des polymères étrangers (6) étant plus bas que celui des particules de PET cristallines (8), et le procédé comprenant les étapes suivantes :
- séparation des particules de PET amorphes (4) du mélange de polymères (2),
- échauffement du mélange de polymères résultant (5) à une température qui se situe entre le point de ramollissement des polymères étrangers (6) et celui des particules de PET cristallines (8),
- séparation des polymères étrangers (6) dudit mélange de polymères résultant (5).

2. Procédé selon la revendication 1, comprenant, par ailleurs, l'étape consistant à ramener les particules de PET amorphes (4) séparées aux particules de PET cristallines (8), après l'étape de la séparation des polymères étrangers (6) dudit mélange de polymères résultant (5).

3. Procédé selon la revendication 1 ou la revendication 2, d'après lequel l'étape de la séparation des particules de PET amorphes (4) du mélange de polymères (2) est un processus de séparation à air, de préférence un processus de séparation à air en zigzag, un processus de tri à table pneumatique ou un processus de tri à table de séparation.

4. Procédé selon les revendications 1 à 3, d'après lequel l'étape de la séparation des polymères étrangers (6) comprend la mise en contact avec un corps de contact mécanique, de préférence un rouleau métallique en rotation, sur lequel adhèrent les polymères étrangers (6), et d'après lequel l'étape de l'échauffement du mélange de polymères résultant (5) s'effectue de préférence par un chauffage du corps de contact mécanique.

5. Procédé selon les revendications 1 à 4, d'après lequel l'étape de l'échauffement produit une modification de coloration, de préférence vers une coloration foncée, des polymères étrangers (6), et l'étape de la séparation des polymères étrangers (6) du mélange de polymères résultant (5) comprend la détection et le tri des polymères étrangers (6) sur la base de la modification de coloration.

6. Procédé selon les revendications 2 à 5, d'après lequel les particules de PET amorphes (4) séparées sont, avant l'étape les ramenant aux particules de PET cristallines (8), transformées par une cristallisation thermique, en particules de PET cristallisées thermiquement (7).

7. Procédé selon la revendication 6, d'après lequel la cristallisation thermique produit une modification de coloration de polymères étrangers (6) résiduels, de préférence vers une coloration foncée, et le procédé comprend l'étape d'une production de particules de PET cristallisées thermiquement et épurées (9), par séparation des polymères étrangers (6) des particules de PET cristallisées thermiquement (7), par leur détection et leur tri sur la base de la modification de coloration.
